(19) **Europäisches Patentamt / European Patent Office / Office européen des brevets**

(11) **EP 1 760 705 B1**

(12) **EUROPEAN PATENT SPECIFICATION**

(45) Date of publication and mention
of the grant of the patent:
**17.02.2010 Bulletin 2010/07**

(51) Int Cl.:
*G11B 7/135* (2006.01)

(21) Application number: **06119825.5**

(22) Date of filing: **30.08.2006**

(54) **Compatible optical pickup and optical recording and/or reproducing apparatus employing the same**

Kompatibler optischer Lesekopf sowie optische Aufzeichnungs- und/oder Wiedergabevorrichtung mit einem solchen Lesekopf

Tête de lecture optique compatible et appareil d'enregistrement et/ou de reproduction optique utilisant cette tête

(84) Designated Contracting States:
**DE FR GB NL**

(30) Priority: **03.09.2005 KR 20050082004**

(43) Date of publication of application:
**07.03.2007 Bulletin 2007/10**

(73) Proprietor: **Samsung Electronics Co., Ltd.**
**Yeongtong-gu**
**Suwon-city, Gyeonggi-do 442-742 (KR)**

(72) Inventors:
  • **Yoo, Jang-hoon**
   **Yangcheon-gu**
   **Seoul (KR)**
  • **Park, Soo-han**
   **Poogdeokcheon-dong**
   **Suji-gu**
   **Yongin-si (KR)**

  • **Ahn, Young-man**
   **Gwonseon-gu**
   **Gyeonggi-do**
   **Suwon-si (KR)**
  • **Kim, Tae-kyung**
   **Seoul (KR)**
  • **Yoon, Yong-han**
   **Gyeonggi-do**
   **Suwon-si (KR)**
  • **Jeon, Young-sun**
   **Songpa-gu**
   **Seoul (KR)**

(74) Representative: **Waddington, Richard**
   **Appleyard Lees**
   **15 Clare Road**
   **GB-Halifax, West Yorkshire HX1 2HY (GB)**

(56) References cited:
**EP-A2- 1 030 296       US-A- 6 049 518**
**US-A1- 2003 007 446    US-A1- 2004 105 374**
**US-A1- 2004 213 135**

**Description**

The present invention relates to an optical pickup and an optical recording and/or reproducing apparatus employing the same, and more particularly, to a compatible optical pickup which is compatible with a plurality of information storage medium standards and uses only one objective lens, and an optical recording and/or reproducing apparatus employing the optical pickup.

Compact discs (CDs) and digital versatile discs (DVDs) are widely used nowadays, and blu-ray discs (BDs) and high-definition digital versatile discs (HD DVDs) are being released on the market.

New optical recording media such as BDs and HD DVDs have been developed to increase recording density. A light source which emits light with a short wavelength, and an objective lens with a high numerical aperture (NA), must both be used to read these high-density formats. A DVD standard uses a light source with a wavelength of 650 nm and an objective lens with an NA of 0.6. Accordingly, to increase the recording density, a light source which emits blue light with a wavelength of 400 to 408 nm, and an objective lens with an NA of 0.65 to 0.85, should be used. A BD disc has a thickness (i.e., an interval between a light incident plane and an information storage surface, corresponding to the thickness of a protection layer in this case) of approximately 0.1 mm, requires an objective lens with an NA of 0.85, and requires a light source with a wavelength of approximately 405 nm. The BD has a recording capacity of approximately 25 GB. Furthermore, an HD DVD standard uses a light source with a wavelength identical to that of the BD standard, an objective lens with an NA of 0.65, and a substrate with a thickness of approximately 0.6 mm, to have a recording capacity of approximately 15 GB.

Therefore, an apparatus compatible with these two optical disc standards, BD and HD DVD, is needed.

DVD standards, such as DVD-RAM and DVD ±RW standards, use light sources with similar wavelengths, objective lenses with similar NAs, and optical disc substrates with similar thicknesses. In these standards, only the track pitch or the optical disc structure is different. Accordingly, since the operation of condensing light emitted from a light source onto an optical disc is almost the same regardless of which of these older optical disc standards is employed, people have designed a method of performing focusing and tracking of DVDS which is compatible with various track pitches.

However, the thicknesses of optical discs are different in the case of next-generation DVD standards, such as the BD and HD DVD standards. This difference in the thicknesses of the optical disks generates severe spherical aberration. Accordingly, it is necessary to compensate for the spherical aberration.

To compensate for the spherical aberration caused by the difference in thickness of these next-generation optical discs when one light source is used, a method using two objective lenses has been suggested.

U.S. Patent No. 5,892,749 discloses an optical pickup using two fixed objective lenses. However, the optical pickup disclosed in the '749 patent is harder to adjust, because an adjustment of an optic axis using two fixed objective lenses is more difficult than an adjustment of an optical pickup having only a single objective lens.

US 2004/0213135 discloses a system for reading different types of optical disk using twin light sources.

US 2004/0105374 discloses selective use of plural polarized optical beams and conversion of the polarization of those beams to read optical discs.

The present invention provides a compatible optical pickup which is compatible with a plurality of optical information storage media having different recording densities by using one objective lens, a polarization changer that changes the polarization of incident light, and a polarization hologram that selectively changes a refractive power according to the polarization of incident light, and an optical recording and/or reproducing apparatus employing the optical pickup.

According to the present invention there is provided an apparatus as set forth in the appended claims. Preferred features of the invention will be apparent from the dependent claims, and the description which follows.

According to an aspect of the present invention, there is provided a compatible optical pickup including a light source which is operable to emit light with a first wavelength, an objective lens that is operable to focus incident light on an information storage medium, a polarization changer which is operable to change the light with the first wavelength incident from the light source into light beams with first and second polarizations that are orthogonal to each other, a polarization hologram element having a varying refractive power according to the polarization of the light with the first wavelength that passes through the polarization changer, a photodetector which is operable to receive light that is emitted from the light source, focused on the information storage medium by the objective lens, and reflected by the information storage medium, and an optical path changer which is operable to guide the light reflected by the information storage medium toward the photodetector, wherein the optical pickup can compatibly adopt the first information storage medium and a second information storage medium having a different thickness from the first information storage medium, wherein the light source is a light source which is operable to emit blue light, the first information storage medium is a blu-ray disc (BD), and the second information storage medium may be a high-definition digital versatile disc (HD DVD), and the optical pickup may further include a driving unit which is operable to drive the polarization changer, wherein the driving unit is operable to drive the polarization changer so that the optic axis of the polarization changer is at an equal angle to or orthogonal to the polarization direction of the light incident from the light source.

The polarization changer may be a half wave plate with respect to the light which is emitted from the light source.

The polarization changer may be disposed between the optical path changer and the objective lens.

The optical path changer may be a polarization beam splitter.

The polarization hologram element may have a polarization hologram area that is operable to directly transmit the light with the first polarization to the objective lens, which is operable to focus the light with the first polarization onto the first information storage medium, and to refract the light with the second polarization to the objective lens, which is operable to focus the light with the second polarization onto the second information storage medium.

The polarization hologram area may be formed so that, when the light with the other polarization refracted therefrom is incident on the objective lens, an effective numerical aperture of the objective lens is a numerical aperture required by the standard of the second information storage medium.

The polarization changer may be fixed so that the optic axis of the polarization changer can range from 0 to 45 degrees or from 45 to 90 degrees with respect to the polarization direction of the light incident from the light source, and the polarization changer may be operable to change the polarization of the light with the first wavelength incident from the light source into light beams with first and second polarizations which are orthogonal to each other.

The optical pickup may further include a low density optical system which is operable to emit light suitable for a third information storage medium to compatibly utilize the third information storage medium which has a lower recording density than the first and second information storage media, the low density optical system being operable to receive light reflected by the third information storage medium, and an optical path coupler which is operable to couple an optical path of light emitted from the low density optical system to an optical path of the light with the first wavelength, wherein the optical pickup is operable to compatibly utilize the first, second, and third information storage media, and the third information storage medium is at least one of a digital versatile disc (DVD) and/or a compact disc (CD).

The optical pickup may further include an optical element that is interposed between the low density optical system and the objective lens, and which is operable to achieve an effective numerical aperture suitable for the third information storage medium.

The optic axis may also be at an angle θ satisfying the following formula to, at an angle of 45 degrees to, or at an angle of 135 degrees to the polarization direction of the light incident from the light source. The optic axis may also be at an angle θ with respect to the polarization direction of the light incident from the light source according to the following formula:

$$0° < θ < 45° \text{ or } 45° < θ < 90°.$$

The optical pickup may further include a quarter wave plate with respect to the light with the first wavelength disposed on an optical path between the polarization changer and the polarization hologram element.

According to another aspect of the present invention, there is provided an optical recording and/or reproducing apparatus including an optical pickup which is operable to move in a radial direction of an information storage medium and to record or reproduce information on the information storage medium, and a control unit which is operable to control the optical pickup.

All of the features disclosed herein may be combined with any of the above aspects, in any combination.

Additional aspects and/or advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:

FIG. 1 illustrates an optical pickup according to an embodiment of the present invention;
FIG. 2 is a plan view of a polarization hologram element of the optical pickup of FIG. 1 according to an embodiment of the present invention;
FIG. 3 illustrates a change in the polarization of light in the optical pickup of FIG. 1 when a blu-ray disc (BD), which requires a high numerical aperture (NA), for example, an NA of 0.85, is reproduced;
FIG. 4 illustrates a change in the polarization of light in the optical pickup of FIG. 1 when a high-definition digital versatile disc (HD DVD), which requires the same wavelength as a BD and a lower NA than a BD, for example, an NA of 0.65, , is reproduced;
FIG. 5 illustrates an optical pickup according to another embodiment of the present invention;
FIG. 6 illustrates a change in the polarization of light in the optical pickup of FIG. 5 when a BD is used, wherein a polarization changer transmits light incident from a light source without changing the polarization of the light, and the fast or slow axis of a quarter wave plate makes an angle of 45 degrees or 135 degrees with respect to the polarization direction of the light incident on the polarization changer from the light source;

FIG. 7 illustrates a change in the polarization of light in the optical pickup of FIG. 5 when an HD DVD is used, wherein the optic axis of a polarization changer makes an angle θ, for example, an angle of 22.5 degrees, with respect to the polarization direction of light incident from the light source, and the fast or slow axis of a quarter wave plate makes an angle of 45 degrees or 135 degrees with respect to the polarization direction of the light incident from the light source on the polarization changer; and

FIG. 8 illustrates an optical recording and/or reproducing apparatus employing an optical pickup according to aspects of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

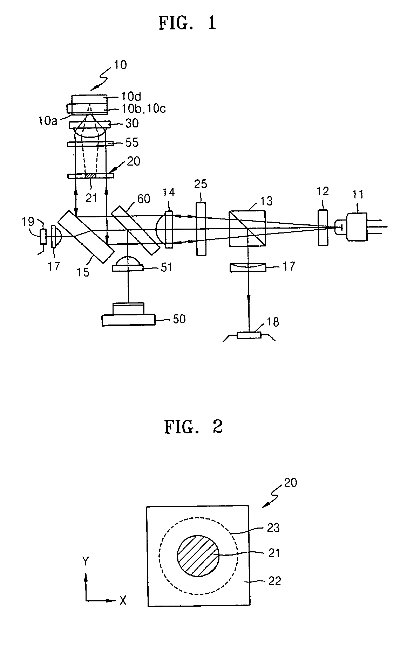

FIG. 1 illustrates an optical pickup, also known as an optical system, that is compatible with a plurality of information storage medium standards, according to an embodiment of the present invention.

Referring to FIG. 1, the optical pickup includes a light source 11, an objective lens 30 which focuses incident light on an information storage medium 10, the objective lens 30 being suitable for a first information storage medium of a predetermined standard, for example, a blu-ray disc (BD) 10a, a polarization changer 25 which changes the polarization of light having a first wavelength incident from the light source 11 into first and second polarizations that are orthogonal to each other, a polarization hologram element 20 which selectively changes a refractive power according to the polarization of the light which passes through the polarization changer 25, a photodetector 18 which receives part of the light having the first wavelength, and an optical path changer which guides the light reflected by the information storage medium 10 toward the photodetector 18. The light having the first wavelength is emitted from the light source 11, focused on the information storage medium 10 by the objective lens 30, and reflected by the information storage medium 10. The optical pickup is compatible with a first information storage medium, such as a BD 10a, and also with a second information storage medium, such as a high-definition digital versatile disc (HD DVD) 10b, which has a different thickness from the first information storage medium.

The light source 11 may be a light source which emits blue light. The first information storage medium may be the BD 10a, and the second information storage medium may be the HD DVD 10b. The light source 11 may emit blue light with a first wavelength, for example, a wavelength of approximately 400-408 nm, which can be used for both the BD 10a and the HD DVD 10b. The BD 10a has a thickness of approximately 0.1 mm, and the HD DVD 10b has a thickness of approximately 0.6 mm. The light source 11 may be a semiconductor laser, but may also be other kinds of light sources.

The objective lens 30 focuses incident light on the information storage medium 10. The objective lens 30 may be optimized for the BD 10a. In other words, when blue light with a wavelength of approximately 400 nm is incident, the objective lens 30 may form a light spot optimized for the 0.1 mm thick BD 10a with an effective numerical aperture (NA) of approximately 0.85.

The optical path changer may be disposed on an optical path between the light source 11 and the polarization changer 25. The optical path changer may be a polarization-selective optical path changer, for example, the polarization beam splitter 13, although other types of optical path changers may be used in accordance with embodiments of the present invention.

The polarization beam splitter 13 selectively transmits or diffracts incident light according to the polarization of the light emitted from the light source 11. When the light source 11 is a semiconductor laser, since light emitted from a semiconductor laser is primarily first linearly polarized light, for example, P-polarized light, the P-polarized light incident from the light source 11 is transmitted through the polarization beam splitter 13 to the polarization changer 25. If the light source 11 transmits first linearly polarized light, then second linearly polarized light, for example, S-polarized light, which is orthogonal to the first linearly polarized light, is reflected from the information storage medium 10, and is then reflected by the polarization beam splitter 13 to the photodetector 18. Alternatively, S-polarized light may be emitted from the light source 11, in which case the polarization beam splitter 13 may transmit S-polarized light and reflect P-polarized light in the same way. The light source 11 and the photodetector 18 may be adjusted to change which type of polarized light emitted from the light source 11 is transmitted and reflected through the polarization beam splitter 13.

When the optical path changer is the polarization beam splitter 13, the polarization changer 25 may be disposed between the polarization beam splitter 13 and the objective lens 30, although the polarization changer 25 may also be disposed in other locations as well.

When the first objective lens 30 is optimized for the BD 10a, which has a thickness of 0.1 mm, the polarization changer 25 and the polarization hologram element 20 may be configured as follows in order to make the first objective lens 30 compatible with the HD DVD 10b, which has a different thickness and requires a different NA from the BD 10a.

The polarization changer 25 changes the polarization of the light having the first wavelength into first and second polarizations that are orthogonal to each other. The polarization changer 25 may be a half wave plate that changes the polarization of the light with the first wavelength, although the polarization changer 25 is not limited to being a half wave plate.

As is well known, when the optic axis, specifically, the fast axis, of the half wave plate makes an angle of 45 degrees with respect to the polarization direction of incident first linearly polarized light, the polarization of the light is rotated 90 degrees by the half wave plate to emit second linearly polarized light orthogonal to the first linearly polarized light. When the optic axis of the half wave plate makes an angle other than 45 degrees with respect to the polarization direction of incident linearly polarized light, the polarization of the incident first linearly polarized light, such as, for example, P-polarized light, is converted by the half wave plate into two linear polarizations, an S-polarization and a P-polarization, which are orthogonal to each other.

In the present embodiment, the polarization changer 25 has an optic axis, and is fixed so that the optic axis, i.e., the fast axis, of the polarization changer 25 can range from 0 to 45 degrees or from 45 to 90 degrees with respect to the polarization direction of the light with the first wavelength incident from the light source 11. In other words, the polarization changer 25 is disposed so that the optic axis of the polarization changer 25 forms an angle other than 45 degrees with respect to the polarization direction of the linearly polarized light incident from the light source 11. Thus, the polarization changer 25 can change the polarization of the linearly polarized light with the first wavelength incident from the light source 11 into first and second polarizations that are orthogonal to each other. The linearly polarized light may be S-polarized light or P-polarized light, and the first and second polarizations may be an S-polarization and a P-polarization, respectively, or vice versa.

The polarization changer 25 may be configured so that the optic axis of the polarization changer 25 forms an angle of 22.5 degrees with respect to the polarization direction of the light with the first wavelength incident from the light source 11. In this case, the incident S- or P-polarized light is converted by the polarization changer 25 into linearly polarized light with an S-polarization (50%) and a P-polarization (50%).

FIG. 2 is a plan view of the polarization hologram element 20 of the optical pickup of FIG. 1.

Referring to FIG. 2, the polarization hologram element 20 has a polarization hologram area 21 that directly transmits the light with one polarization of the first and second polarizations, which has been polarized through conversion by the polarization changer 25, and refracts the light with the other polarization. The polarization hologram area 21 may have a stepped or blazed holographic pattern formed thereon.

The light with the one polarization linearly transmitted through the polarization hologram area 21 is focused by the objective lens 30 on the BD 10a. The light with the other polarization refracted by the polarization hologram area 21 is focused by the objective lens 30 on the HD DVD 10b.

The polarization hologram area 21 may be formed to generate an effective NA of the objective lens 30 of approximately 0.65, which is the NA required by the HD DVD 10b standard, when the light with the other polarization refracted by the polarization hologram area 21 is incident on the objective lens 30. The polarization hologram area 21 may be formed to a predetermined size on a central portion of the polarization hologram element 20 in order to achieve an effective NA of 0.65. In FIG. 2, reference numeral 22 denotes a transparent area other than the polarization hologram area 21, and reference numeral 23 denotes an area corresponding to an effective NA of 0.85, which is an NA suitable for the BD 10a.

When the polarization hologram area 21 is formed to achieve the effective NA of the objective lens 30 required by the HD DVD 10b standard and the objective lens 30 is optimized for the BD 10a, and when the information storage medium 10 is the BD 10a, the light emitted from the light source is directly transmitted through the transparent area 22 and the polarization hologram area 21 of the polarization hologram element 20 and focused on the surface of the BD 10a

On the other hand, when the information storage medium 10 is the HD DVD 10b, the light emitted from the light source which is directly transmitted through the transparent area 22 and the polarization hologram area 21 of the polarization hologram element 20 cannot be focused on an information storage surface of the HD DVD 10b due to the difference in thickness between the BD 10a and the HD DVD 10b, and thus this light cannot be used with the HD DVD 10b. Only the light refracted by the polarization hologram area 21 of the polarization hologram element 20 is focused on the information storage surface of the HD DVD 10b.

Thus, the optical pickup according to this embodiment of the present invention can be compatibly used with both the BD 10a and the HD DVD 10b formats, using the polarization changer 25 and the polarization hologram element 20, even when the objective lens 30 is optimized for the BD 10a.

To compatibly read a third information storage medium with a lower recording density than the BD10a or the HD DVD 10b, the optical pickup may further include a low density optical system 50 that emits light suitable for the third information storage medium and receives light reflected by the third information storage medium, and an optical path coupler 60 which couples an optical path of light emitted from the low density optical system 50 to an optical path of the light with the first wavelength.

Additionally, the optical pickup according to aspects of the present invention may further include an optical element 55 that is disposed on an optical path between the low density optical system 50 and the objective lens 30, and which achieves an effective NA suitable for the third information storage medium to compatibly adopt low density information storage medium. Instead of the separately installed optical element 55, a hologram may be formed on a lens surface of the objective lens 30.

The optical pickup is compatible with the first, second, and third information storage media. The third information storage medium may be a digital versatile disc (DVD) 10c, or a compact disc (CD) 10d, but is not limited to these information storage media. In other words, the optical pickup according to aspects of the present invention is compatible with the BD 10a, the HD DVD 10b, the DVD 10c, the CD 10d, and other types of information storage media

The low density optical system 50 may include a first optical module for the DVD 10c, a second optical module for the CD 10d, and a beam splitter that couples optical paths of light incident from the first and second optical modules in order to transmit the light along the same optical path and also guides light reflected by the information storage medium 10 toward the first and second optical modules. The low density optical system 50 may further include a first collimating lens 51 for the DVD 10c and the CD 10d. The first collimating lens 51 is interposed between the beam splitter and the optical path coupler 60 and collimates light incident from the first and second optical modules.

The first optical module may be a hologram optical module for the DVD 10c which includes a light source with a red wavelength, for example, a wavelength of approximately 650 nm. The second optical module may be a hologram optical module for the CD 10d which includes a light source with an infrared wavelength, for example, a wavelength of approximately 780 nm. Each of the hologram optical modules includes a light source, a photodetector which detects a signal, and a hologram that linearly transmits light emitted from the light source and diffracts light reflected by the information storage medium 10 into first order light, such that the first order light propagates toward the photodetector. The hologram optical module may further include a grating pattern that is formed onto the surface of a transparent member opposite to a surface on which the hologram is formed and divides incident light into three or more light beams to detect a tracking error signal using a three-beam method. Since the hologram optical module is well known in the art, a detailed description and views thereof will not be given.

The low density optical system 50 may be formed to be used for either the DVD 10c or the CD 10d.

The optical path coupler 60 transmits the light with the first wavelength incident from the light source 11 and reflects red light and/or infrared light incident from the low density optical system 50 to couple the optical path of the light with the first wavelength incident from the light source 11 to the optical path of the red light and/or infrared light incident from the low density optical system 50. The optical path coupler 60 may be a dichroic mirror, but is not limited to being a dichroic mirror.

The optical element 55 may be a diffraction optical element (DOE) or a liquid crystal element, but is not limited to being a DOE or a liquid crystal element.

When the optical element 55 is a DOE and the low density optical system 50 emits red light for the DVD 10c and infrared light for the CD 10d, the DOE transmits the light with the first wavelength, which is suitable for the BD 10a and the HD DVD 10b, and diffracts the red light suitable for the DVD 10c and the infrared light suitable for the CD 10d, in order to achieve effective NAs of approximately 0.6 and 0.45, respectively. The effective NAs can be adjusted by changing a refractive power of the diffraction caused by the DOE.

When the optical element 55 is a liquid crystal element, the liquid crystal element may be formed and driven to transmit the light with the first wavelength suitable for the BD 10a and the HD DVD 10b and selectively block the red light suitable for the DVD 10c and the infrared light suitable for the CD 10d by areas corresponding to effective NAs of approximately 0.6 and 0.45. The effective NAs can be adjusted by changing the NA size of a diaphragm. This NA size is obtained during the operation of the liquid crystal element.

Instead of including the first optical module for the DVD 10c and/or the second optical module for the CD 10d, the low density optical system 50 of the optical pickup according to aspects of the present invention may instead be a separation type optical system in which a light source and a photodetector are separated for compatible use of the DVD 10c and/or the CD 10d. The present invention is not limited to the present embodiment of the low density optical system 50, and the optical configuration of the low density optical system 50 of the optical pickup may be modified variously.

Since the low density optical system 50 used for the DVD 10c and the CD 10d is well known in the art, a detailed description and views of the low density optical system 50 will not be given.

The optical pickup according to aspects of the present invention may further include a second collimating lens 14 as shown in FIG. 1. The second collimating lens 14 is disposed on an optical path between the light source 11 and the objective lens 30 and collimates the divergent light emitted from the light source 11. The optical pickup may further include a grating 12 that is disposed in front of the light source 11 and divides the light with the first wavelength incident from the light source 11 into a plurality of light beams using a three-beam method to detect a tracking error signal. Referring to FIG. 1, the second collimating lens 14 is disposed between the polarization changer 25 and the optical path coupler 60.

The optical pickup may further include a reflecting mirror 15 that bends the optical path of light and a sensing lens 17 that focuses part of the light with the first wavelength, which is reflected by the information storage medium, onto the photodetector 18, to form a proper light spot for effective use. The sensing lens 17 may be an astigmatic lens that can detect a focusing error signal using an astigmatic method. These methods are well-known in the art, and therefore, more detailed descriptions are not included.

The reflecting mirror 15 may be formed to reflect most of the incident light and transmit the remaining part of the incident light. The optical pickup according to this embodiment may further include a monitoring photodetector 19 which is disposed behind the reflecting mirror 15 and monitors light output from the light source 11 and/or the light source of the low density optical system 50, and a condensing lens 17 which condenses light on the monitoring photodetector 19.

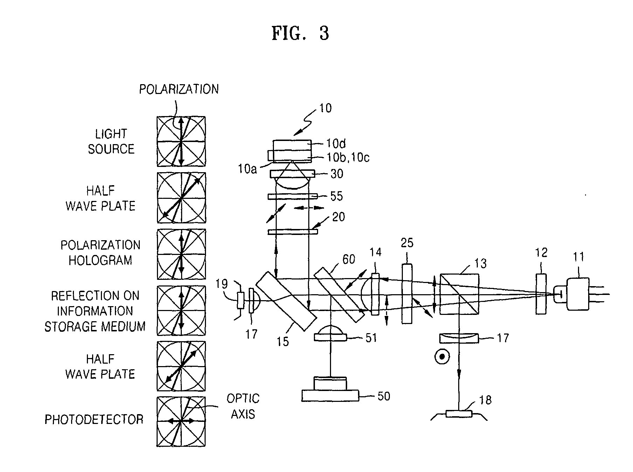

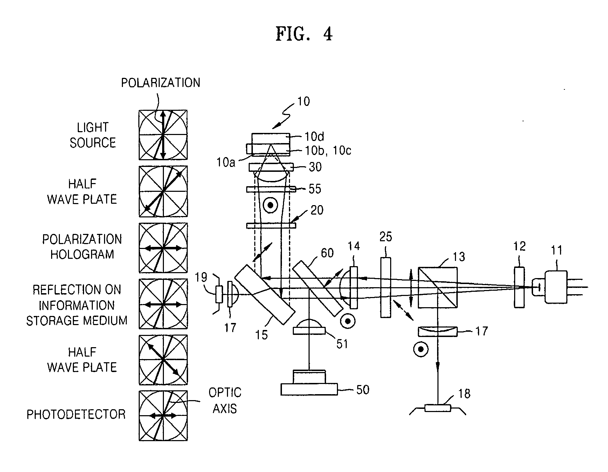

FIGS. 3 and 4 illustrate a change in the polarization of light when the optic axis of the polarization changer 25 is inclined 22.5 degrees with respect to the polarization direction of predetermined linearly polarized light which is emitted from the light source 11 and transmitted through the polarization beam splitter 13. FIG. 3 illustrates when a BD 10a is used and FIG. 4 illustrates when a HD DVD 10b is reproduced.

FIG. 3 illustrates a change in the polarization of light in the optical pickup of FIG. 1 when the BD 10a is reproduced, which requires an NA, for example, of approximately 0.85.

Light emitted from the light source 11 is transmitted through the polarization beam splitter 13, passes through the polarization changer 25, for example, the half wave plate with an optic axis inclined by 22.5 degrees so that the polarization state of the light is rotated by 45 degrees, and then is transmitted to the polarization hologram element 20. To rotate the polarization state of the light by 45 degrees, the optic axis of the polarization changer 25 should form a 22.5 degree angle with respect to the polarization direction of the incident light.

The 45 degree-linearly polarized light has P- and S-polarizations. When the light with the P-polarization is directly transmitted through the polarization hologram area 21 of the polarization hologram element 20, it does not experience refraction. As a result, the light with the P-polarization is focused on the BD 10a by the objective lens 30, which is optimized for the BD 10a. Here, light focused on the BD 10a includes the light with the P-polarization transmitted through the polarization hologram area 21 of the polarization hologram element 20, as well as light propagating outside the polarization hologram area 21.

A reproduction signal of the BD 10a is obtained from the focused light, and a signal light is reflected by the BD 10a. The reflected light is transmitted through the objective lens 30 again and the light with the P-polarization is transmitted through the polarization hologram element 20 to the polarization changer 25 along the same path as incident as shown in FIG. 3, without experiencing refraction. The polarization changer 25 rotates the P-polarized light by -45 degrees and then transmits the rotated light to the polarization beam splitter 13. The polarization beam splitter 13 transmits only the part of the light with an S-polarization to the photodetector 18 to detect a signal of the BD 10a.

The polarization change while the light passes through the respective elements is shown on the left side of FIG. 3. The length of an arrow represents the magnitude of polarized light. An optic axis shown on the left side of FIG. 3 represents the optic axis of the polarization changer 25.

FIG. 4 illustrates a change in the polarization of effective light when the HD DVD 10b, which uses the same wavelength as the BD 10a and a lower NA than the BD 10a, for example, an NA of approximately 0.65, is reproduced. Light emitted from the light source 11 is transmitted through the polarization beam splitter 13, and passes through the polarization changer 25 such that light with a P-polarization is rotated 45 degrees by the polarization changer 25. In order to rotate the polarization of light 45 degrees, the optic axis of the polarization changer 25 should form a 22.5 degree angle with respect to the polarization direction of incident light.

Since the 45-degree linearly polarized light has P- and S-polarizations, only the light with the S-polarization experiences refraction as it passes through the polarization hologram area 21 of the polarization hologram element 20 to be focused on the HD DVD 10b. Light focused on the HD DVD 10b includes only the light with the S-polarization passing through the polarization hologram area 21 of the polarization hologram element 20. The light with the P-polarization passing through the polarization hologram area 21 and light propagating outside the polarization hologram area 21 are not focused on the HD DVD 10b.

A reproduction signal of the HD DVD 10b is obtained from the focused light, and a signal light is reflected by the HD DVD 10b. The reflected light is transmitted through the objective lens 30, such that the refractive power of the light with the S-polarization is affected by the polarization hologram area 21 of the polarization hologram element 20. Then, the light with the S-polarization is transmitted to the polarization changer 25 along the same optical path as the incident light shown in FIG. 4. The polarization changer 25 rotates the light with the S-polarization by -45 degrees and then transmits the rotated light to the polarized beam splitter 13. The polarization beam splitter 13 transmits a part of the light with S-polarization to the photodetector 18 to detect a signal of the HD DVD 10b.

The polarization change while the light is transmitted through the respective elements is shown on the left side of FIG. 4. The length of an arrow represents the magnitude of polarized light. An optic axis shown on the left side of FIG. 4 represents the optic axis of the polarization changer 25.

As described above, since the optical pickup according to aspects of the present invention includes the polarization hologram element 20 which selectively produces a refractive power according to the polarization of light, the optical pickup is compatible with information storage media having different formats and thicknesses but which use the same wavelengths, such as the BD 10a and the HD DVD 10b.. Also, since the optical pickup includes the low density optical system 50, the optical pickup is compatible with the BD 10a, the HD DVD 10b, the DVD 10c, the CD 10d, and other types of lower-density information storage media.

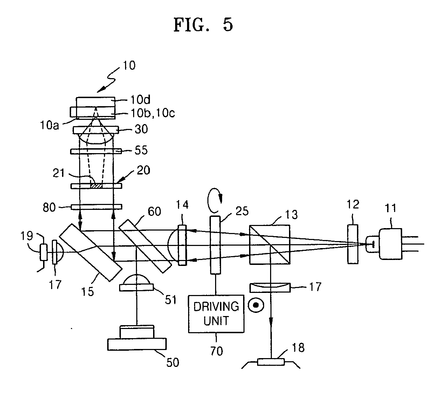

FIG. 5 illustrates a optical pickup according to another embodiment of the present invention. Unlike the optical pickup of FIG. 1, the optical pickup of FIG. 5 further includes a driving unit 70 that actively rotates the polarization changer 25. The elements illustrated in FIG. 5 are identical or similar in function to those of FIG. 1 and are given the same reference numerals as FIG. 1, so a detailed explanation of these elements is omitted.

Referring to FIG. 5, the driving unit 70 rotates the polarization changer 25 according to what kind of information storage medium is used, as well as whether the user is using the optical pickup in a recording mode or a reproduction mode. The optic axis of the polarization changer 25 is equal to, orthogonal to, or forms an angle of 45 degrees, 135 degrees, or $\theta$ to the polarization direction of the light having the first wavelength incident from the light source 11. The angle $\theta$ satisfies the inequality $0° < \theta < 45°$ or $45° < \theta < 90°$. The angle $\theta$ of FIG. 1 corresponds to the angle formed between the optic axis of the polarization changer 25 of FIG. 1 and the polarization direction of the light with the first wavelength incident from the light source 11.

The optical pickup according to aspects of the present invention may further include a quarter wave plate 80 with respect to the wavelength of light emitted from the light source 11. The fast or slow axis of the quarter wave plate 80 may form an angle of 45 degrees or 135 degrees with respect to the polarization direction of the light that is incident from the light source 11 on the polarization changer 25. When the polarization changer 25 is driven to transmit the light incident from the light source 11 without changing the polarization of the light or rotating the polarization direction of the light by 90 degrees, the quarter wave plate 80 may turn the P-polarized light propagating from the light source 11 into circularly polarized light after the P-polarized light passes through the quarter wave plate 80.

When the polarization changer 25 is driven by the driving unit 70 so that the optic axis of the polarization changer 25 is equal to or orthogonal to the polarization direction of light incident from the light source 11, the light emitted from the light source 11 is transmitted through the polarization changer 25 without changing the polarization of the light emitted from the light source 11.

When the polarization changer 25 is driven by the driving unit 70 so that the optic axis of the polarization changer 25 forms an angle of 45 degrees or 135 degrees with respect to the polarization direction of the light incident from the light source 11, the polarization changer 25 rotates the polarization direction of the light by 90 degrees when the light incident from the light source 11 passes through the polarization changer 25.

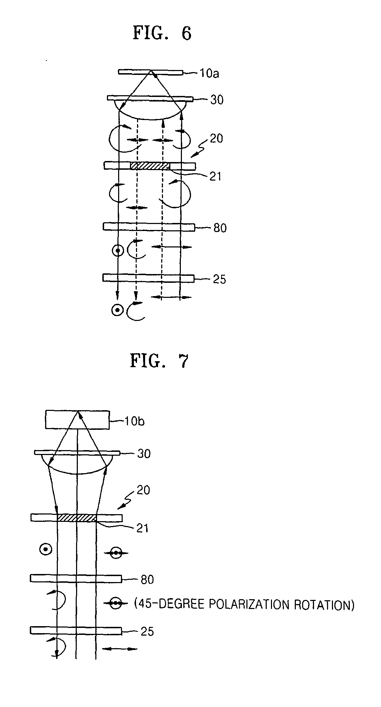

FIG. 6 illustrates the optical pickup of FIG. 5 when applied to the BD 10a, and specifically, illustrates a change in the polarization of light with respect to the BD 10a when the polarization changer 25 transmits the light emitted from the light source 11 without changing the polarization of the light and the fast or slow axis of the quarter wave plate 80 forms an angle of 45 degrees or 135 degrees with respect to the polarization direction of the light incident on the polarization changer 25 from the light source 11.

Referring to FIG. 6, light, for example, P-polarized light, passes through the quarter wave plate 80 to become first circularly polarized light. The first circularly polarized light may have an S-polarization (50%) and a P-polarization (50%). These different polarizations have a phase difference of 90 degrees and the same magnitude.

Accordingly, within the first circularly polarized light, the light with the P-polarization is directly transmitted through the polarization hologram area 21 and then focused on the BD 10a by the objective lens 30, and the light propagating outside the polarization hologram area 21 of the polarization hologram element 20 is also focused by the objective lens 30 on the BD 10b.

The first circularly polarized light is reflected by the BD 10a to become second circularly polarized light which is orthogonal to the first circularly polarized light.

The second circularly polarized light reflected by the BD 10a, along with the light having the P-polarization, are both transmitted through the polarization hologram element 20 to a position incident on the quarter wave plate 80, and then become S-polarized light and predetermined circularly polarized light, respectively, by the quarter wave plate 80, and finally are transmitted through the polarization changer 25 without a change in polarization.

As described with reference to FIG. 6, when the polarization changer 25 is disposed so that at least part of the light incident on the BD 10a can be circularly polarized light, then the optical pickup according to aspects of the present invention detects a high quality reproduction signal, improves reproduction performance, and forms a high quality light spot on the BD 10a, even if the BD 10a has a birefringence characteristic.

When the polarization changer 25 is driven so that the light transmitted through the polarization changer 25 has the S-polarization or the P-polarization shown in FIG. 6, if the HD DVD 10b format is used instead of the BD 10a format, only the light with the S-polarization refracted by the polarization hologram area 21 of the polarization hologram element 20 can be focused on the HD DVD 10b.

FIG. 7 illustrates the optical pickup of FIG. 5 when applied to the HD DVD 10b, and specifically, illustrates a change in the polarization of light with respect to the HD DVD 10b when the optic axis of the polarization changer 25 forms an angle of $\theta$, for example, an angle of 22.5 degrees, with respect to the polarization direction of the light emitted from the light source 11 and the fast or slow axis of the quarter wave plate 80 forms an angle of 45 degrees or 135 degrees with respect to the polarization direction of the light incident on the polarization changer 25 from the light source 11.

Referring to FIG. 7, when the angle of θ is 22.5 degrees, P-polarized light passes through the polarization changer 25 such that the polarization direction of the light is rotated 45 degrees. Since the polarization direction of the P-polarized light, which has been rotated 45-degrees by the polarization changer 25, is equal to the fast or slow axis of the quarter wave plate 80, the rotated light can be transmitted through the quarter wave plate 80 without having its polarization changed.

Within the rotated light, only the light with an S-polarization is refracted by the polarization hologram area 21 of the polarization hologram element 20 before being focused on the HD DVD 10b. The light with the S-polarization is then reflected by the HD DVD 10b, refracted by the polarization hologram element 20 as it proceeds toward the quarter wave plate 80 along the same optical path as its original optical path, and becomes circularly polarized light by the quarter wave plate 80. The circularly polarized light is then transmitted through the polarization changer 25 without changing polarity.

When the polarization changer 25 is driven to rotate light 45-degrees which is transmitted through the polarization changer 25, as shown in FIG. 7, if the BD 10a is used instead of the HD DVD 10b, P-polarized light passing through the polarization hologram area 21 of the hologram element 20 is not refracted, and light propagating outside the polarization hologram area 21 to be polarized by 45 degrees is focused on the BD 10a.

When a user actively rotates the polarization changer 25 as described above, since part of the light incident on the information storage medium 10 can be turned into circularly polarized light, a high quality reproduction signal is detected and a high quality recording performance is achieved, even when the BD 10a has a birefringence characteristic.

Accordingly, the optical pickup according to another embodiment of the present invention controls an optical recording and/or reproducing apparatus to ensure an outstanding recording performance and detect a high quality reproduction signal by pivoting the polarization changer 25 according to the birefringence characteristic of the information storage medium adopted. The optical pickup according to another embodiment of the present invention allows the user to adjust the optical pickup so that the optic axis of the polarization changer 25 forms a proper angle with respect to the polarization direction of the light, depending on whether the user wants to use the optical pickup in a recording mode or a reproduction mode.

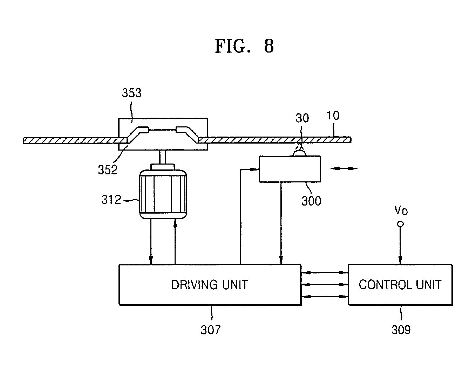

FIG. 8 illustrates an optical recording and/or reproducing apparatus employing an optical pickup according to various embodiments of the present invention.

Referring to FIG. 8, the optical recording and/or reproducing apparatus includes a spindle motor 312 which rotates the information storage medium 10, an optical pickup 300 which is movable in a radial direction of the information storage medium 10 and which reproduces and/or records information on the information storage medium 10, a driving unit 307 which drives the spindle motor 312 and the optical pickup 300, and a control unit 309 which controls the focus and tracking servos of the optical pickup 300. Reference numeral 352 denotes a turntable, and reference numeral 353 denotes a clamp which holds the information storage medium 10.

The optical pickup 300 may be any one of the optical pickups illustrated in FIGS. 1 and 5.

Light reflected by the information storage medium 10 is detected by the photodetector of the optical pickup 300 in order to be converted into an electrical signal, and the electrical signal is inputted to the control unit 309 through the driving unit 307. The driving unit 307 controls the rotational speed of the spindle motor 312, amplifies an input signal, and drives the optical pickup 300. The control unit 309 delivers a focus servo, a tracking servo and/or a tilting servo command, based on another signal inputted from the driving unit 307 to the driving unit 307, to enable the optical pickup 300 to perform focusing, tracking, and/or tilting operations. The optical recording and/or reproducing apparatus employing the optical pickup according to aspects of the present invention is compatible with the BD 10a, the HD DVD 10b, and at least one of either the DVD 10c or the CD 10d, and can ensure a high speed operation because only one objective lens 30 is used, compared with a conventional actuator which uses one lens holder and two objective lenses.

As described above, the optical pickup according to aspects of the present invention is compatible with the BD and the HD DVD using only one objective lens.

The optical pickup according to aspects of the present invention employs a polarization changer and a polarization hologram element to minimize the number of elements and easily realize a compatible objective lens.

Although a few preferred embodiments have been shown and described, it will be appreciated by those skilled in the art that various changes and modifications might be made without departing from the scope of the invention, as defined in the appended claims.

**Claims**

**1.** An optical pickup which is compatible with a plurality of information storage medium standards, the optical pickup comprising:

a light source (11) which is operable to emit blue light;

an objective lens (30) which is operable to focus the light emitted from the light source (11) onto an information storage medium (10);

a polarization changer (25) which is operable to change the light into first and second light beams with first and second polarizations, respectively, which are orthogonal to each other;

a polarization hologram element (20) which has a varying refractive power according to the polarization of the first and second light beams;

a photodetector (18) which is operable to receive light after the light has been emitted from the light source (11), focused on the information storage medium (10) by the objective lens (30), and reflected by the information storage medium (10); and

an optical path changer (13) which is operable to guide the light reflected by the information storage medium (10) toward the photodetector (18), wherein the optical pickup is compatible with a first information storage medium (10a) and a second information storage medium (10b) which has a different thickness from the first information storage medium (10);

wherein the first information storage medium (10a) is a blu-ray disc, and the second information storage medium (10b) is a high-definition digital versatile disc,

wherein the polarization hologram element (20) has a polarization hologram area (21) which is operable to directly transmit the light beam with the first polarization to the objective lens (30) so that the light beam with the first polarization is focused onto the first information storage medium (10a), and to refract the light with the second polarization to the objective lens (30) so that the light beam with the second polarization is focused onto the second information storage medium (10b), and the polarization hologram area (21) is circular and is surrounded by a transparent area (22) other than the polarization hologram area (21), such that light of the first polarization and light of the second polarization is directly transmitted through the transparent area.

2. The optical pickup of claim 1, wherein the polarization changer (25) is a half wave plate.

3. The optical pickup of claim 1 or claim 2, wherein the polarization changer (25) is disposed between the optical path changer (13) and the objective lens (30).

4. The optical pickup of claim 3, wherein the optical path changer (13) is a polarization beam splitter.

5. The optical pickup of any preceding claim, wherein the polarization hologram area (21) is formed so that, when the light beam with the second polarization diffracted from the polarization hologram area (21) is transmitted to the objective lens (30), the polarization hologram area (21) forms a numerical aperture of the objective lens (30) to focus the light beam with the second polarization onto the second information storage medium.

6. The optical pickup of claim 5, wherein the polarization hologram area (21) is formed so that, when the light beam with the second polarization refracted from the polarization hologram area (21) is transmitted to the objective lens (30), the polarization hologram area (21) forms a numerical aperture which focuses the light beam with the second polarization onto the second information storage medium (10b).

7. The optical pickup of any one of claims 1 to 6, wherein the polarization changer (25) is configured so that an optic axis of the polarization changer (25) ranges from 0 to 45 degrees or from 45 to 90 degrees with respect to a polarization direction of the light emitted from the light source (11).

8. The optical pickup of any preceding claim, further comprising:

a low density optical system which is operable to emit light suitable for a third information storage medium (10c) which has a lower recording density than the first and second information storage media (10a,10b), the low density optical system being operable to receive light reflected by the third information storage medium (10c); and

an optical path coupler (60) which is operable to couple an optical path of light emitted from the low density optical system to an optical path of the light emitted from the light source (11), wherein the optical pickup is compatible with the first, second, and third information storage media (10a,b,c), and the third information storage medium (10c) is at least one of a digital versatile disc or a compact disc.

9. The optical pickup of any preceding claim, further comprising an optical element which is interposed between the low density optical system and the objective lens (30), and which focuses light emitted from the low density optical system onto the third information storage medium (10c) by creating a suitable numerical aperture.

10. The optical pickup of any preceding claim, further comprising a quarter wave plate (80) disposed on an optical path between the polarization changer (25) and the polarization hologram element (20).

11. An optical recording and/or reproducing apparatus, comprising:

the optical pickup of any one of claims 1 to 10, wherein the optical pickup is designed to be movable in a radial direction of an information storage medium (10) and to record or reproduce information on the information storage medium (10); and
a control unit which is operable to control movement of the optical pickup.

**Patentansprüche**

1. Optischer Lesekopf, de r mit mehreren Informationsspeichermediumstandards kompatibel ist, wobei de r optische Lesekopf Folgendes umfasst:

eine Lichtquelle (11), die betreibbar ist, um blaues Licht zu emittieren;
eine Objektivlinse (30), die betreibbar ist, um das von der Lichtquelle (11) emittierte Licht auf ein Informationsspeichermedium (10) zu fokussieren;
eine Polarisationsänderungsvorrichtung (25), die betreibbar ist, um das Licht in einen ersten und einen zweiten Lichtstrahl mit einer ersten bzw. zweiten Polarisation, die zueinander orthogonal sind, umzuändern;
ein Polarisationshologrammelement (20), das eine variierende Brechungskraft gemäß der Polarisation des ersten und zweiten Lichtstrahls aufweist;
einen Photodetektor (18), der betreibbar ist, um Licht zu empfangen, nachdem das Licht von der Lichtquelle (11) emittiert, durch die Objektivlinse (30) auf das Informationsspeichermedium (10) fokussiert und durch da s Informationsspeichermedium (10) reflektiert wurde; und
ein e optische Wegänderungsvorrichtung (13), die betreibbar ist, um das durch das Informationsspeichermedium (10) reflektierte Licht in Richtung des Photodetektors (18) zu führen, wobei der optische Lesekopf mit einem ersten Informationsspeichermedium (10a) und einem zweiten Informationsspeichermedium (10b), das eine andere Dicke als das erste Informationsspeichermedium (10) aufweist, kompatibel ist;

wobei das erste Informationsspeichermedium (10a) eine Blu-ray-Disc ist und das zweite Informationsspeichermedium (10b) eine hochauflösende Digital Versatile Disc ist,
wobei das Polarisationshologrammelement (20) einen Polarisationshologrammbereich (21) aufweist, der betreibbar ist, um den Lichtstrahl mit der ersten Polarisation direkt zu der Objektivlinse (30) zu senden, so dass der Lichtstrahl mit der ersten Polarisation auf das erste Informationsspeichermedium (10a) fokussiert wird, und das Licht mit der zweiten Polarisation zu der Objektivlinse (30) zu brechen, so dass der Lichtstrahl mit der zweiten Polarisation auf das zweite Informationsspeichermedium (10b) fokussiert wird, und der Polarisationshologrammbereich (21) kreisförmig ist und durch einen von dem Polarisationshologrammbereich (21) verschiedenen transparenten Bereich (22) umgeben wird, so dass Licht der ersten Polarisation und Licht der zweiten Polarisation direkt durch den transparenten Bereich gesendet wird.

2. Optischer Lesekopf nach Anspruch 1, wobei die Polarisationsänderungsvorrichtung (25) eine Halbwellen-Platte ist.

3. Optischer Lesekopf nach Anspruch 1 oder 2, wobei die Polarisationsänderungsvorrichtung (25) zwischen de r optischen Wegänderungsvorrichtung (13) und der Objektivlinse (30) angeordnet ist.

4. Optischer Lesekopf nach Anspruch 3, wobei die optische Wegänderungsvorrichtung (13) ein Polarisationsstrahlteiler ist.

5. Optischer Lesekopf nach einem der vorhergehenden Ansprüche, wobei der Polarisationshologrammbereich (21) so gebildet ist, dass, wenn der von dem Polarisationshologrammbereich (21) gebeugte Lichtstrahl mit der zweiten Polarisation zu der Objektivlinse (30) gesendet wird, der Polarisationshologrammbereich (21) eine numerische Apertur der Objektivlinse (30) so bildet, dass der Lichtstrahl mit der zweiten Polarisation auf das zweite Informationsspeichermedium fokussiert wird.

6. Optischer Lesekopf nach Anspruch 5, wobei der Polarisationshologrammbereich (21) s o gebildet ist, dass, wenn der von dem Polarisationshologrammbereich (2 1) gebrochene Lichtstrahl mit der zweiten Polarisation zu der Objektivlinse (30) gesendet wird, der Polarisationshologrammbereich (21) eine numerische Apertur bildet, die den Lichtstrahl mit der zweiten Polarisation auf d a s zweite Informationsspeichermedium (10b) fokussiert.

7. Optischer Lesekopf nach einem der Ansprüche 1 bis 6 , wobei die Polarisationsänderungsvorrichtung (25) so ausgelegt ist, dass eine optische Achse der Polarisationsänderungsvorrichtung (25) im Bereich von 0 bis 45 Grad oder von 45 bis 90 Grad mit Bezug auf eine Polarisationsrichtung des von der Lichtquelle (11) emittierten Lichts liegt.

8. Optischer Lesekopf nach einem der vorhergehenden Ansprüche, ferner umfassend:

ein optisches System niedriger Dichte, das betreibbar ist, um Licht zu emittieren, das für ein drittes Informationsspeichermedium (10c) geeignet ist, das eine niedrigere Aufzeichnungsdichte als das erste und zweite Informationsspeichermedium (10a, 10b) aufweist, wobei das optische System niedriger Dichte betreibbar ist**,** um durch das dritte Informationsspeichermedium (10c) reflektiertes Licht zu empfangen; und

einen optischen Wegkoppler (60), der betreibbar ist, um einen optischen Weg von aus dem optischen System niedriger Dichte emittiertem Licht mit einem optischen Weg des aus der Lichtquelle (11) emittierten Lichts zu koppeln, wobei der optische Lesekopf mit dem ersten, zweiten und dritten Informationsspeichermedium (10a, b, c) kompatibel ist un d da s dritte Informationsspeichermedium (10c) eine Digital Versatile Disc und/oder eine Compact Disc ist.

9. Optischer Lesekopf nach einem der vorhergehenden Ansprüche, ferner mit einem optischen Element, dass zwischen dem optischen System niedriger Dichte und der Objektivlinse (30) angeordnet ist und das aus dem optischen System niedriger Dichte emittiertes Licht durch Erzeugung einer geeigneten numerischen Apertur au f das dritte Informationsspeichermedium (10c) fokussiert.

10. Optischer Lesekopf nach einem der vorhergehenden Ansprüche, ferner mit einer Viertelwellen-Platte (80), die auf einem optischen Weg zwischen der Polarisationsänderungsvorrichtung (25) und dem Polarisationshologrammelement (20) angeordnet ist.

11. Optische Aufzeichnungs- und/oder Wiedergabevorrichtung, umfassend:

den optischen Lesekopf nach einem der Ansprüche 1 bis 10 , wobei der optische Lesekopf dafür ausgelegt ist, in einer radialen Richtung eines Informationsspeichermediums (10) bewegbar zu sein und Informationen auf dem Informationsspeichermedium (10) aufzuzeichnen oder wiederzugeben; und

eine Steuereinheit, die betreibbar ist, um die Bewegung des optischen Lesekopfs zu steuern.

**Revendications**

1. Tête de lecture optique et compatible avec une pluralité de normes de supports d e stockage d'informations, la tête de lecture optique comprenant :

une source de lumière (11) qui a pour fonction d'émettre de la lumière bleue ;

un objectif (30) qui a pour fonction de focaliser la lumière émise par la source de lumière (11) vers un support de stockage d'informations (10) ;

un changeur de polarisation (25) qui a pour fonction de transformer la lumière en des premier et second faisceaux lumineux ayant respectivement des première et seconde polarisations orthogonales l'une à l'autre ;

un élément à hologramme de polarisation (20) qui a un pouvoir de réfraction variable en fonction de la polarisation des premier et second faisceaux lumineux ; un photodétecteur (18) qui a pour fonction de recevoir de la lumière après que la lumière a été émise par la source de lumière (11), focalisée sur le support d'informations (10) par l'objectif (30) et réfléchie par le support de stockage d'informations (10) ; et

un changeur de chemin optique (13) qui a pour fonction de guider la lumière réfléchie par le support de stockage d'informations (10) vers le photodétecteur (18), dans lequel la tête de lecture optique est compatible avec un premier support de stockage d'informations (10a) et avec une second support de stockage d'informations (10b) qui a une épaisseur différente de celle du premier support de stockage d'informations (10) ;

dan s lequel le premier support d e stockage d'informations (10a) est un disque Blu-ray, et le second support de stockage d'informations (10b) est un disque numérique universel à haute définition,

dans lequel l'élément à hologramme de polarisation (20) a une zone d'hologramme de polarisation (21) qui a pour fonction de transmettre directement le faisceau lumineux ayant la première polarisation vers l'objectif (30) afin que le faisceau lumineux ayant la première polarisation soit focalisé sur le premier support de stockage d'informations (10a), et de réfracter la lumière ayant la seconde polarisation vers l'objectif (30) afin que le faisceau lumineux ayant la seconde polarisation soit focalisé sur le second support de stockage d'informations (10b), et dans lequel la zone d'hologramme de polarisation (21) est circulaire et entourée d'une zone transparente (22) autre que la zone d'hologramme de polarisation (21), afin que la lumière ayant la première polarisation et que la lumière ayant la seconde polarisation soient directement transmises à travers la zone transparente.

2. Tête de lecture optique selon la revendication 1, dans lequel le changeur de polarisateur (25) est une lame demi-onde.

3. Tête de lecture optique selon la revendication 1 ou la revendication 2, dans laquelle le changeur de polarisateur (25) est disposé entre le changeur de chemin optique (13) et l'objectif (30).

4. Tête de lecture optique selon la revendication 3, dans laquelle le changeur de chemin optique (13) est une séparatrice de faisceaux à polarisation.

5. Tête de lecture optique selon l'une quelconque des revendications précédentes, dans laquelle la zone d'hologramme de polarisation (21) est formée de telle façon que, lorsque le faisceau lumineux ayant la seconde polarisation et diffracté par la zone d'hologramme de polarisation (21) est transmis vers l'objectif (30), la zone d'hologramme de polarisation (21) forme une ouverture numérique de l'objectif (30) pour focaliser le faisceau lumineux ayant la seconde polarisation su r le second support de stockage d'informations.

6. Tête de lecture optique selon la revendication 5, dans laquelle la zone d'hologramme de polarisation (21) est formée de telle façon que lorsque le faisceau lumineux ayant la seconde polarisation et réfracté par la zone d'hologramme de polarisation (21) est transmis vers l'objectif (30), la zone d'hologramme de polarisation (21) forme une ouverture numérique qui focalise le faisceau lumineux ayant la seconde polarisation su r le second support de stockage d'informations (10b).

7. Tête de lecture optique selon l'une quelconque des revendications 1 à 6, dans laquelle le changeur de polarisation (25) est configuré de telle façon qu'un axe optique du changeur de polarisation (25) soit dans un intervalle de 0 à 45 degrés ou de 45 à 90 degrés par rapport à une direction de polarisation de la lumière émise par la source de lumière (11).

8. Tête de lecture optique selon l'une quelconque des revendications précédentes, comprenant en outre :

un système optique de faible densité qui a pour fonction d'émettre une lumière appropriée pour un troisième support de stockage d'informations (10c) ayant une densité d'enregistrement plus faible que celle des premier et second supports de stockage d'informations (10a, 10b), le système optique de faible densité ayant pour fonction de recevoir de la lumière réfléchie par le troisième support de stockage d'informations (10c) ; et
un coupleur de chemin optique (60) qui a pour fonction de coupler un chemin optique de la lumière émise par le système optique de faible densité à un chemin optique de la lumière émise par la source de lumière (11), dans lequel la tête de lecture optique est compatible avec les premier, second et troisième supports de stockage d'informations (10a,b,c), et dans lequel le troisième support de stockage d'informations (10c) est au moins l'un d'un disque numérique universel ou d'un disque compact.

9. Tête de lecture optique selon l'une quelconque des revendications précédentes, comprenant en outre un élément optique qui est interposé entre le système optique de faible densité et l'objectif (30) et qui focalise la lumière émise par le système optique de faible densité sur le troisième support de stockage d'informations (10c) en créant une ouverture numérique appropriée.

10. Tête de lecture optique selon l'une quelconque des revendications précédentes, comprenant en outre une lame quart d'onde (80) disposée sur un chemin optique entre le changeur de polarisation (25) et l'élément à hologramme de polarisation (20).

11. Appareil d'enregistrement et/ou de reproduction optique, comprenant :

la tête de lecture optique selon l'une quelconque des revendications 1 à 10, dans lequel la tête de lecture optique est conçue pour être mobile dans une direction radiale d'un support de stockage d'informations (10) et pour enregistrer ou reproduire des informations sur le support de stockage d'informations (10) ; et
une unité de commande qui a pour fonction de commander le mouvement de la tête de lecture optique.

FIG. 1

FIG. 2

FIG. 3

FIG. 4

POLARIZATION

| | |
|---|---|
| LIGHT SOURCE | |
| HALF WAVE PLATE | |
| POLARIZATION HOLOGRAM | |
| REFLECTION ON INFORMATION STORAGE MEDIUM | |
| HALF WAVE PLATE | |
| PHOTODETECTOR | |

OPTIC AXIS

FIG. 5

# FIG. 6

# FIG. 7

(45-DEGREE POLARIZATION ROTATION)

## FIG. 8

**EP 1 760 705 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5892749 A
- US 20040213135 A
- US 20040105374 A